# EUROPEAN PATENT APPLICATION

(11) **EP 2 439 349 A2**
(43) Date of publication of application: **11.04.2012**
(21) Application number: 10783510.0
(22) Date of filing: 01.04.2010
(51) Int. Cl.: E03F 5/04, E03F 7/02, E03C 1/28, F16K 15/14

(54) **APPARATUS FOR PREVENTING OFFENSIVE ODORS FOR A DRAIN**

(30) Priority: 05.06.2009 KR 20090049836
(71) Applicant: Yoo, Jung-Soo, Gangwon-do 240-805 (KR)
(72) Inventor: Yoo, Jung-Soo, Gangwon-do 240-805 (KR)
(74) Representative: Garavelli, Paolo
(86) International application number: PCT/KR2010/002026
(87) International publication number: WO 2010/140761

(57) **Abstract**

The present invention relates to an apparatus for preventing offensive odors for a drain. The apparatus for preventing offensive odors for a drain according to the present invention comprises a mounting member, a main body member, and a linear and inclined resilient band. The mounting member includes a ring-shaped support plate portion mounted on the drain, a hollow tube-shaped neck portion which extends downward from the support plate portion and the center of which has a drainage path, and a curved portion for interconnecting the support plate portion and the neck portion. The main body member includes a tubular mounting portion coupled to the outer surface of the neck portion through a connecting element, and a discharge portion extending from the lower portion of the mounting portion so as to be selectively opened. The linear and inclined resilient band is arranged at the outer surface of onside of the discharge portion in the widthwise direction such that both ends of the band are located at different heights. The thus-configured apparatus of the present invention is advantageous in that the water inlet part of the mounting member has a slow curve to enable the smooth inflow of wastewater, and the resilient band arranged at the outer surface of the discharge portion of the main body member is inclined at a predetermined angle to enable the discharge portion to be opened in an elliptical shape, which enables the discharge portion to be easily opened even when the amount of wastewater is small, thereby improving drainage efficiency and reducing the fatigue of the resilient band, thus improving durability and ensuring a long lifespan.

## Description

### [Technical Field]

The present invention relates to an apparatus for preventing offensive odors for a drain to prevent offensive odors from occurring from a drain of home or from a manhole of roads, and more particularly, to an apparatus for preventing offensive odors for a drain which enables a main body member to be opened in an elliptical shape to thereby reduce the fatigue of a resilient band and ensure a long lifespan and improve the amount of drained wastewater by raising a drainage speed.

### [Background Art]

As known widely, a drain is used to discharge rainwater or wastewater from houses, plants, hospitals, etc., and includes a drainage pipe built underground and a discharging path formed in an upper portion of the drainage pipe. An installation member is provided in a ground side of the discharging path, and a drain cover which has a grating structure or a plurality of holes is installed in the installation member. After being introduced through the drainage pipe through the drain cover, wastewater is discharged to a wastewater treatment facility.

An odor prevention member which includes a predetermined discharging path is provided in the installation member of the drain to prevent odors for a drain.

However, the conventional odor prevention member has the discharging path that is stained by dirt, impurities or sediment of wastewater to obstruct sooth drainage and reduce odor prevention efficiency. Accordingly, Korean Patent No. 10-068937 discloses an apparatus for preventing odor for drain which discharges wastewater efficiently and improves odor prevention efficiency (the "Registered Patent").

The Registered Patent includes a drain mounting member and a main body member extending from the drain mounting member and including synthetic resin. The main body member is open when wastewater is discharged and closed when no wastewater is discharged to thereby prevent odor for a drain.

However, the Registered Patent has the main body member which includes a synthetic resin and is easily damaged if a pedestrian throw away a lit cigarette or discharge hot water through a drain cover. To solve the foregoing problem, the present applicant has filed application No. 10-2007-0106332 for an improved apparatus for preventing offensive odors for a drain.

The previous patent application filed by the present application, which is an apparatus for preventing offensive odors for a drain, includes a mounting portion mounted in a drain, a communication portion connected to the mounting portion and a main body portion including first and second lateral walls extending from a lower portion of the communication portion and having internal surfaces detachably adhered to each other and first and second edgy portions connecting both ends of the first and second lateral walls. The main body portion includes synthetic resin and heat-resistant covering area covering internal and external surfaces of the synthetic resin.

However, the apparatus for preventing offensive odors for a drain, which is the previous patent application filed by the present applicant, has a resilient band that is arranged in a perpendicular direction to a drainage path of the communication portion, and uniform drainage pressure should be applied to the entire resilient band in an open state. Thus, opening and closing operations are not performed smoothly, and the fatigue of the resilient band is great, shortening the lifespan of the resilient band.

### [Disclosure]

### [Technical Problem]

The present invention has been made to solve the problems and it is an object of the present invention to provide an apparatus for preventing offensive odors for a drain which has a main body member including a resilient band arranged at a predetermined angle and a mounting portion whose inlet is curved to ensure smooth opening and closing operations, improve drainage efficiency, reduce the fatigue of a resilient band and ensure a long lifespan.

### [Technical Solution]

In order to achieve the object of the present invention, an apparatus for preventing offensive odors for a drain comprises a mounting member which comprises a ring-shaped support plate portion mounted on the drain, a hollow tube-shaped neck portion which extends downward from the support plate portion and the center of which has a drainage path, and a curved portion for interconnecting the support plate portion and the neck portion; a main body member which comprises a tubular mounting portion coupled to the outer surface of the neck portion through a connecting element, and a discharge portion extending from the lower portion of the mounting portion so as to be selectively opened; and a linear and inclined resilient band which is arranged at the outer surface of one side of the discharge portion in the widthwise direction such that both ends of the band are located at different heights.

As a preferably characteristic of the present invention, a soft sealing flange protrudes from and is formed in a lower surface of the mounting member and is resiliently deformed when contacting the ground to maintain a water sealing, and the support plate portion and the neck portion have a circular or rectangular shape.

As another preferable characteristic of the present invention, the connecting element comprises a connecting band which surrounds and bands an external surface of the mounting portion fitted to an external surface of the neck portion or upper and lower couplers and which contact upper and lower surfaces of a flange portion extending an end portion of the mounting portion of the main body member and form a screw hole to be coupled to a lower surface of the support plate portion by screw.

As another preferable characteristic of the present invention, the discharge portion comprises at least two inclined resilient bands provided in upper and lower surfaces at a predetermined interval, or an inclined resilient band formed in one surface and a resilient plate formed in a second surface and comprising resilient silicon, urethane, rubber or synthetic resin material.

As another preferable characteristic of the present invention, the inclined resilient band comprises a thin resilient part therein with a curvature.

Characteristics and advantages of the present invention will be more apparent by the following detailed description with accompanying drawings. Prior to the foregoing, terms and words used in this specification or claims shall not be interpreted as typical or dictionary meanings, but shall be interpreted as meanings and concepts complying with the technical spirit of the present invention in accordance with the principle that the inventor may properly define the concept of the terms to explain his/her invention by the best method.

### [Advantageous Effect]

As described above, the apparatus for preventing offensive odors for a drain according to the present invention is advantageous in that the water inlet part of the mounting member has a slow curve to enable the smooth inflow of wastewater, and the resilient band arranged at the outer surface of the discharge portion of the main body member is inclined at a predetermined angle to enable the discharge portion to be opened in an elliptical shape, which enables the discharge portion to be easily opened even when the amount of wastewater is small, thereby improving drainage efficiency and reducing the fatigue of the resilient band, thus improving durability and ensuring a long lifespan.

### [Brief Description of Drawings]

FIG. 1 is a perspective view of an apparatus for preventing offensive odors for a drain according to an exemplary embodiment of the present invention.

FIG. 2 is an exploded perspective view of the apparatus for preventing offensive odors for a drain in FIG. 1.

FIG. 3 is a vertical sectional view of the apparatus for preventing offensive odors for a drain in FIG. 1.

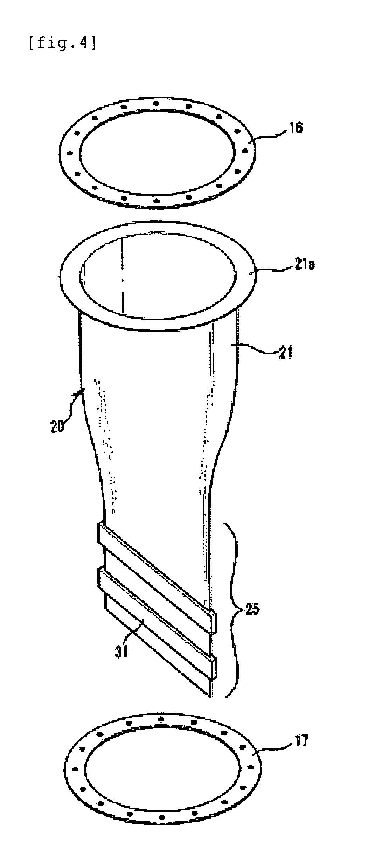

FIG. 4 is a perspective view of the apparatus for preventing offensive odors for a drain which is mounted in a different method.

FIG. 5 is a perspective view of the apparatus for preventing offensive odors for a drain according to another exemplary embodiment of the present invention.

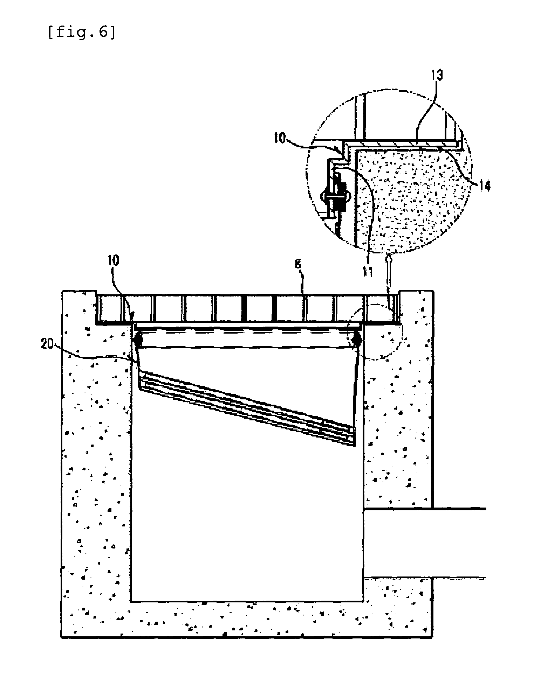

FIG. 6 is a sectional view of the apparatus for preventing offensive odors for a drain in a mounted state.

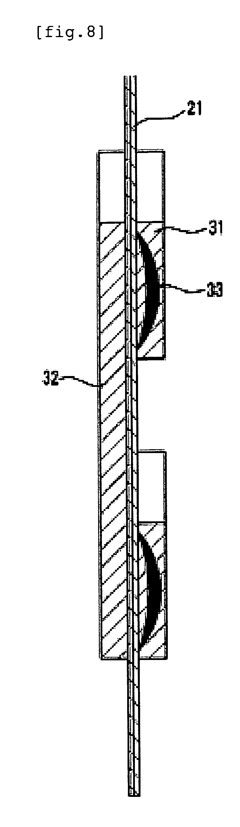

FIGS. 7 to 9 are lateral views of main parts of a resilient member applying to a main body member of the apparatus for preventing offensive odors for a drain according to the present invention.

<Brief description of reference numerals of major parts in drawings>

10: mounting member 11: neck portion

13: support plate portion 20: main body member

21: mounting portion 25: discharge portion

31: resilient band 32: resilient plate

### [Best Mode]

Hereinafter, an apparatus for preventing offensive odors for a drain according to the present invention will be described in detail with reference to accompanying drawings. Descriptions of well-known parts are omitted for clarity, and like reference numerals refer to like elements throughout.

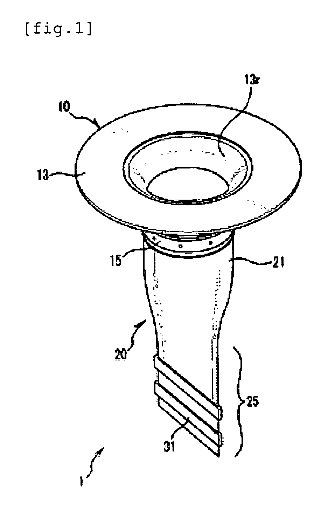

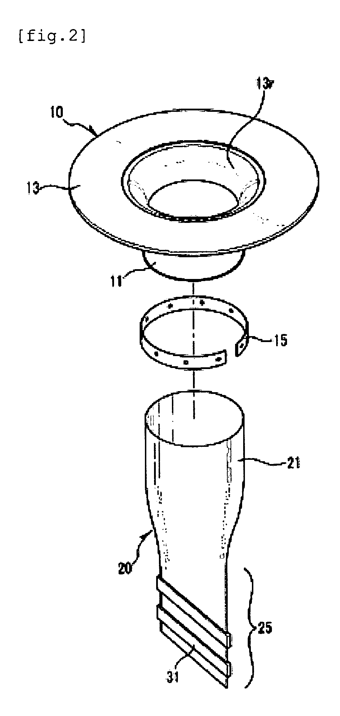

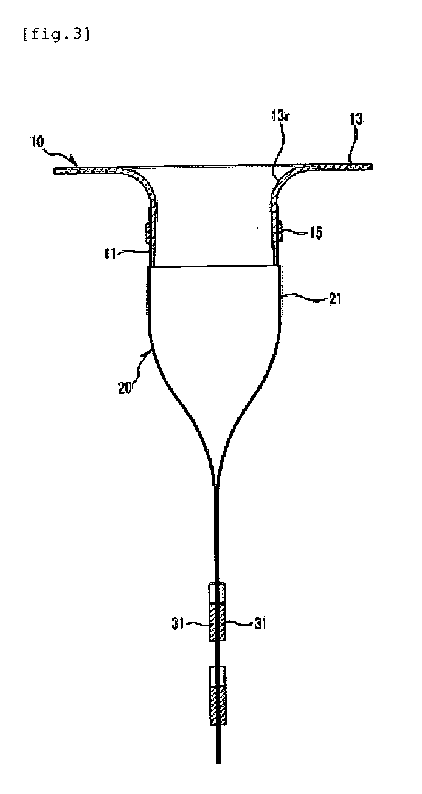

FIG. 1 is a perspective view of an apparatus for preventing offensive odors for a drain according to an exemplary embodiment of the present invention. FIG. 2 is an exploded perspective view of the apparatus for preventing offensive odors for a drain in FIG. 1. FIG. 3 is a vertical sectional view of the apparatus for preventing offensive odors for a drain in FIG. 1.

As shown therein, an apparatus for preventing offensive odors for a drain 1 according to the present invention includes a mounting member 10 which is installed in an installation member of a drain, a main body member 20 which is connected to a lower portion of the mounting member 10 through a connecting element and an inclined resilient band 31 which supports and enables the main body member 20 to be opened by resiliently pressing a part of the main body member 20 to open the main body member 20 only when water is discharged.

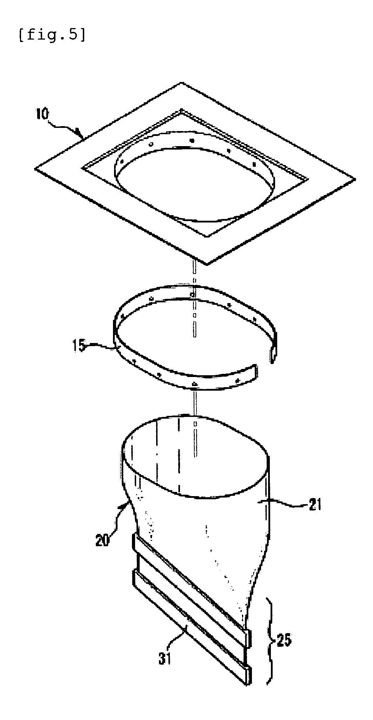

The mounting member 10 includes a neck portion 11 and a support plate portion 13 which have a circular shape as in FIG. 2 or a neck portion 11 and a support plate portion 13 which have a rectangular shape as in FIG. 5. A drainage path is formed in the center of the neck portion 11 and the support plate portion 13.

That is, the mounting member 10 includes the support plate portion 13 which forms a large contact surface to be stably seated in the installation member of the drain and a circumference portion whose center is penetrated, and the neck portion 11 which is a hollow tube vertically extending from a lower portion of the support plate portion 13 and covered by the main body member 20 (which will be described later). The support plate portion 13 and the neck portion 11 may have a circular shape as shown in FIG. 2 or may have a rectangular shape as shown in FIG. 5 depending on the shape of the drain.

The mounting member 10 includes a curved portion 13r which connects the support plate portion 13 and the neck portion 11 and has a predetermined curvature to allow wastewater to be promptly introduced to the main body member 20.

In the mounting member 10, a sealing flange 14 which includes a soft material protrudes from and is formed in a lower surface of the support plate portion 13. The sealing flange 14 is resilient deformed when contacting the ground and prevents water or impurities from being introduced from the outside, other than a drainage path. The sealing flange 14 may be provided solely in a circumference of a lower surface of the support plate portion 13 or provided in at least pair forming a concentric circle at a predetermined interval. In the present invention, two sealing flanges 14 are provided at a predetermined interval in FIG. 5.

The sealing flanges 14 may be manufactured separately from the mounting member 10 and attached thereto by an additional process. In the present invention, the sealing flanges 14 are manufactured by injection molding together with the mounting member 10.

The connecting element may include a connecting band 15 which surrounds and bands an external surface of the mounting portion 21 fitted to an external surface of the neck portion 11 as shown in FIGS. 2 and 5, or upper and lower couplers 16 and 17 which contact upper and lower surfaces of a flange portion 21a extending an end portion of the mounting portion 21 of the main body member 20 and forming a screw hole to be coupled to a lower surface of the support plate portion 13 by screw.

The connecting element may further include adhesive tape, rubber band or band as long as it couples and fixes the neck portion 11 and the mounting portion 21.

The main body member 20 includes the mounting portion 21 which is shaped like a tube and is coupled to an external surface of the neck portion 11 through the connecting element, and the discharge portion 25 which integrally extends from a lower surface of the mounting portion 21 and is selectively opened.

The mounting portion 21 forms a space therein as shown in drawings and has an upper portion that surrounds and is coupled to an external surface of the neck portion 21 through the connecting element. The discharge portion 25 integrally extends from and is formed in a lower side of the mounting portion 21.

The mounting portion 21 may be manufactured by coupling two sheets of thin heat-resistant films at edges thereof by heat. In the present invention, the mounting portion 21 including synthetic resin is integrally formed by an injection molding without any seam.

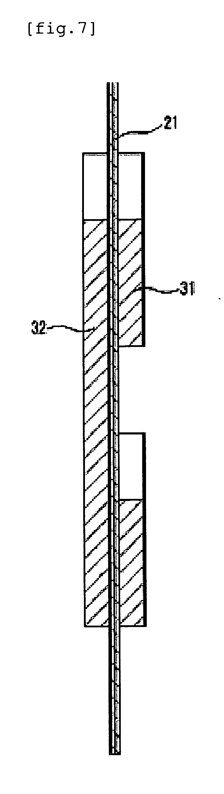

The discharge portion 25 may include at least two inclined resilient bands 31 in upper and lower surfaces at a predetermined interval as shown in FIG. 3, or an inclined resilient band 31 formed in a one surface and a resilient plate 32 formed in a second surface and including resilient silicon, urethane, rubber or synthetic resin material as shown in FIG. 7.

The discharge portion 25 may include an inclined surface corresponding to an inclination angle of the resilient band 31 as shown in drawings.

The main body member 20 may include a heat-resistant covering structure, whose external surface includes a synthetic resin such as poly ethylene and whose internal surface includes a heat-resistant covering layer. The heat-resistant covering layer may include urethane, silicone, epoxy, fabric or cloth.

The inclined resilient band 31 is arranged in the widthwise direction in an external surface of the discharge portion 25, and include a linear resilient member whose both ends are provided at different heights. The resilient band 31 is resiliently deformed by wastewater introduced toward the mounting portion 21 and supports the discharge portion 25 to be opened in an elliptical shape. If water is introduced to the mounting portion 21, an initial opening is performed promptly and efficiently to thereby ensure stable drainage.

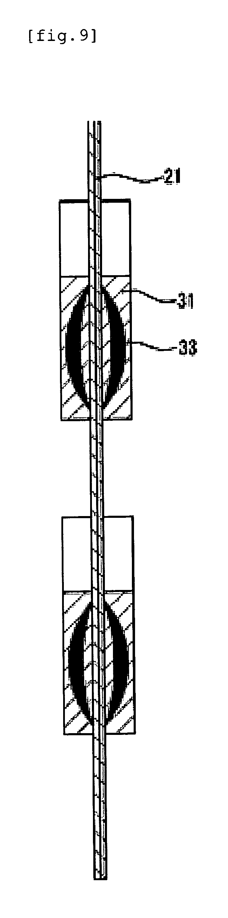

As shown in FIG. 9, the inclined resilient band 31 may include a thin resilient part 33 having a curvature, or have a predetermined curvature as a whole not to impede the opening of the discharge portion 25.

The reference numeral g refers to a grating.

Although a few exemplary embodiments have been shown and described, it will be appreciated by those skilled in the art that changes may be made in these exemplary embodiments without departing from the principles and spirit of the invention, the range of which is defined in the appended claims and their equivalents.

## Claims

1. An apparatus for preventing offensive odors for a drain, the apparatus comprising:
a mounting member 10 which comprises a ring-shaped support plate portion 13 mounted on the drain, a hollow tube-shaped neck portion 11 which extends downward from the support plate portion 13 and the center of which has a drainage path, and a curved portion 13r for interconnecting the support plate portion 13 and the neck portion 11;
a main body member 20 which comprises a tubular mounting portion 21 coupled to the outer surface of the neck portion 11 through a connecting element, and a discharge portion 25 extending from the lower portion of the mounting portion 21 so as to be selectively opened; and
a linear and inclined resilient band 31 which is arranged at the outer surface of one side of the discharge portion 25 in the widthwise direction such that both ends of the band are located at different heights.

2. The apparatus according to claim 1, wherein a soft sealing flange 14 protrudes from and is formed in a lower surface of the mounting member 10 and is resiliently deformed when contacting the ground to maintain a water sealing, and the support plate portion 13 and the neck portion 11 have a circular or rectangular shape.

3. The apparatus according to claim 1, wherein the connecting element comprises a connecting band 15 which surrounds and bands an external surface of the mounting portion 21 fitted to an external surface of the neck portion 11 or upper and lower couplers 16 and 17 which contact upper and lower surfaces of a flange portion 21a extending an end portion of the mounting portion 21 of the main body member 20 and form a screw hole to be coupled to a lower surface of the support plate portion 13 by screw.

4. The apparatus according to claim 1, wherein the discharge portion 25 comprises at least two inclined resilient bands 31 provided in upper and lower surfaces at a predetermined interval, or an inclined resilient band 31 formed in one surface and a resilient plate 32 formed in a second surface and comprising resilient silicon, urethane, rubber or synthetic resin material.

5. The apparatus according to claim 1 or 4, wherein the inclined resilient band 31 comprises a thin resilient part 33 therein with a curvature.
